Europäisches Patentamt

European Patent Office

Office européen des brevets

(11) Numéro de publication: **0 484 764 A1**

# DEMANDE DE BREVET EUROPEEN

(21) Numéro de dépôt: **91118223.6**

(22) Date de dépôt: **25.10.91**

(51) Int. Cl.⁵: **G01B 13/10**

(30) Priorité: **05.11.90 FR 9013763**

(43) Date de publication de la demande:
**13.05.92 Bulletin 92/20**

(84) Etats contractants désignés:
**CH DE ES GB IT LI SE**

(71) Demandeur: **MESELTRON S.A.**
**Avenue de Beauregard 16**
**CH-2035 Corcelles(CH)**

(72) Inventeur: **Wegmann, Heinz**
**Untere Bahnhofstrasse 28**
**CH-8932 Mettmenstetten(CH)**

(74) Mandataire: **de Raemy, Jacques et al**
**ICB Ingénieurs Conseils en Brevets SA**
**Passage Max. Meuron 6**
**CH-2001 Neuchâtel(CH)**

(54) **Dispositif de mesure des dimensions d'une pièce.**

(57) Le dispositif de mesure des dimensions d'une pièce (14) comporte un circuit dans lequel circule un fluide. Ce circuit comprend une première branche (15) munie d'une buse d'entrée (16) et d'au moins une buse de mesure (17) dirigée vers la pièce dont il s'agit de mesurer les dimensions et une seconde branche (19) munie d'une buse d'entrée (20) et débouchant dans une buse de sortie de référence (21). Un transducteur de pression (22) délivre un signal électrique représentatif de la différence des pressions dans les deux branches.

Le dispositif est original en ce sens que le fluide utilisé est un liquide et que les buses d'entrée sont arrangées pour délivrer à leur sortie un écoulement de liquide produisant un bruit minimum sur le signal électrique issu du transducteur de pression.

Utilisation pour des mesures in process d'alésages cylindriques ou de diamètres extérieurs de pièces cylindriques ou encore de surfaces planes.

Fig.2

La présente invention concerne un dispositif de mesure des dimensions d'une pièce comprenant un circuit dans lequel circule un liquide, ledit circuit comportant une première branche munie d'une buse d'entrée et d'au moins une buse de mesure dirigée vers la pièce dont il s'agit de mesurer les dimensions, et une seconde branche munie d'une buse d'entrée et débouchant dans une buse de sortie de référence, un transducteur de pression délivrant un signal électrique représentatif de la différence des pressions régnant dans les deux branches du circuit et des moyens pour raccorder les buses d'entrée à une source de pression régulée.

Un tel dispositif de mesure est connu et est décrit par exemple dans la norme DIN 2271 où de l'air sous pression est utilisé à la place du liquide employé dans le présent dispositif. Un dispositif semblable est décrit dans le document EP-B-0 109 936 ( = US-A-4 538 449).

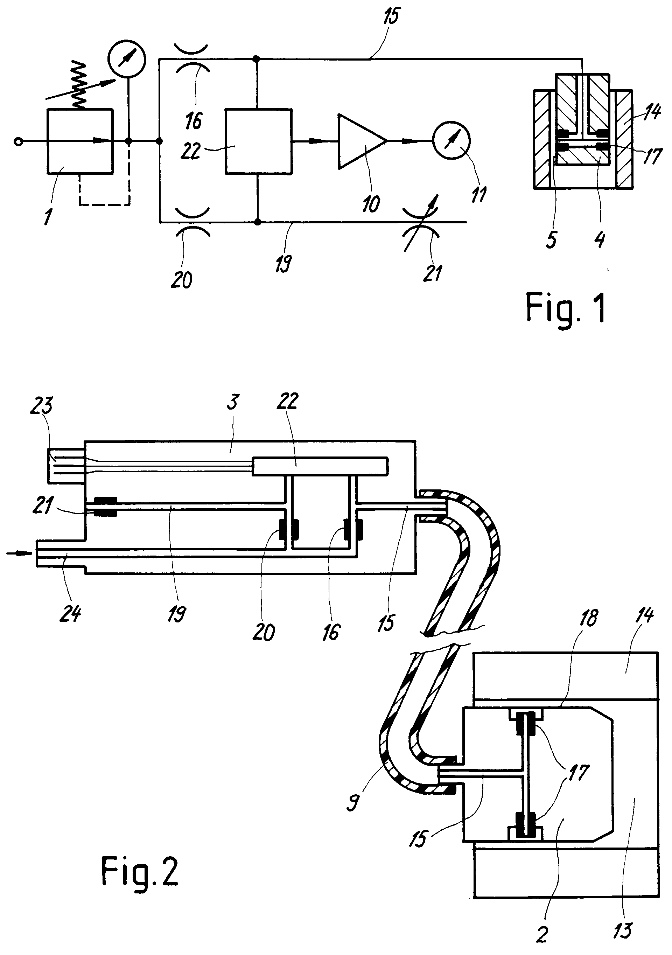

Comme on le voit dans la figure 1, le dispositif du document cité consiste à alimenter par l'intermédiaire d'un régulateur de pression 1 un circuit pneumatique comprenant une première branche 15 munie d'une buse d'entrée 16 et d'une broche de mesure 4 susceptible par exemple d'être introduite dans un alésage 5 dont le diamètre doit être mesuré, ainsi qu'une deuxième branche 19 munie d'une buse d'entrée 20 débouchant dans une buse de référence 21, dont le débit peut être réglable. Un transducteur de pression 22 branché entre les branches 15 et 19 délivre un signal électrique représentatif de la différence des pressions régnant dans ces branches, qui est amplifié par un dispositif amplificateur 10 avant d'être fourni par exemple à un dispositif indicateur 11. Il est clair ainsi que si la broche 4 est introduite dans un alésage plus grand par exemple, la pression régnant dans la branche 15 sera réduite, et la variation de la pression différentielle détectée par le transducteur 22 sera représentative de l'augmentation du diamètre de l'alésage 5. L'intérêt essentiel du montage différentiel est d'absorber automatiquement des variations parasites de pression, dues par exemple au fonctionnement du régulateur de pression 1, ou à des effets de température.

L'objet de l'invention décrite au document EP 0 109 936 est de proposer une amélioration des dispositifs connus, qui permette de réduire considérablement le bruit de mesure, de même que la constante de temps du dispositif de mesure et la sensibilité aux vibrations, tout en autorisant un réglage simple et indépendant de la sensibilité du dispositif et de zéro du signal de sortie.

A cet effet, l'invention citée prévoit d'utiliser un transducteur de pression différentielle à éléments semi-conducteurs et de disposer l'ensemble du transducteur et du circuit pneumatique à l'intérieur même de la broche de mesure. Tout en laissant la liberté de définir le circuit pneumatique de manière optimale, de façon à limiter au maximum la production de bruit de mesure, cette solution permet d'obtenir un dispositif de mesure totalement insensible aux vibrations, et dont la constante de temps, de l'ordre d'un dixième de seconde, est suffisamment faible pour permettre de réaliser des mesures extrêmement rapides, par exemple entre deux pénétrations dans une pièce d'un outil d'usinage oscillant, ou de mesurer des surfaces discontinues d'une pièce en mouvement.

Malgré les améliorations qu'il apporte, le système de l'invention citée présente plusieurs inconvénients tous liés au fait que le fluide utilisé est de l'air sous pression :

Le liquide de coupe utilisé pour refroidir et lubrifier la pièce à usiner se trouve souvent être un mélange à base de pétrole. Si de l'air sous pression est utilisé pour la mesure des dimensions de la pièce en même temps qu'on usine celle-ci, le pétrole de refroidissement peut être pulvérisé par l'air et provoquer ainsi des explosions si l'outil de coupe produit des étincelles. Très généralement aussi, le liquide de coupe ainsi pulvérisé peut être nocif pour la santé ou, tout au moins, provoquer un inconfort général et un salissement des objets se trouvant dans l'environnement de la machine.

Il a été signalé que la constante de temps du dispositif de mesure est de l'ordre d'un dixième de seconde (100 ms). Ce temps de réaction est lié au fait que le fluide utilisé est de l'air essentiellement compressible. Dans certains cas, le temps atteint de 100 ms ralentit le processus d'usinage, par exemple dans l'usinage de rectification d'alésages intérieurs ou le va et vient de la meule pourrait être beaucoup plus fréquent pour un laps de temps déterminé si le temps de séjour du dispositif de mesure à l'intérieur de la pièce pouvait être racourci. Du fait de l'élasticité de l'air utilisé pour la mesure, les pressions mettent un certain temps à s'établir et à se stabiliser aux endroits de mesure, ce qui empêche donc un usinage rapide puisqu'il est nécessaire de procéder à une mesure qui dure relativement longtemps après chaque passage de l'outil.

On notera encore que dans le document cité, la constante de temps de 100 ms a pu être atteinte grâce au fait que le dispositif de mesure et la broche de mesure ne font qu'un tout, diminuant ainsi la longueur des chemins parcourus par l'air. Cet avantage conduit cependant à la réalisation d'un appareillage plus lourd et plus encombrant convenant mal à la mesure de petites pièces.

Les inconvénients cités ont déjà été pressentis par le déposant de la présente invention qui a proposé, dans un dispositif appelé Hydrocompar de remplacer l'air des systèmes connus par un liquide pour pallier lesdits inconvénients.

En utilisant un liquide à la place de l'air, on a pu réduire considérablement la constante de temps du système et des temps de l'ordre de 10 ms ont été observés, ce qui améliore de 10 fois la réponse du système par rapport aux systèmes exécutés selon le document cité ci-dessus. Ceci est dû principalement à l'incompressibilité quasi totale du liquide. Le liquide utilisé, en plus qu'il ne peut pas être suivi d'effets de pulvérisation, n'oblige plus à prévoir la construction d'un système compact encombrant et parfois mal commode.

Le dispositif Hydrocompar cité ci-dessus mettait en oeuvre des buses d'entrée identiques à celles utilisées sur des dispositifs utilisant de l'air avec l'inconvénient de créer des turbulences indésirables pour le liquide. Or, ces turbulences provoquent un bruit de fond important sur le transducteur de pression.

Pour éviter les inconvénients cités, le dispositif de mesure selon la présente invention est caractérisé par le fait que les buses d'entrée sont équipées de moyens pour délivrer à leur sortie un écoulement du liquide produisant un bruit minimum sur le signal électrique issu du transucteur de pression.

L'invention sera comprise maintenant à la lecture de la description suivante illustrée par le dessin donnant des exemples de réalisation, dessin dans lequel :

- la figure 1 est une vue schématique d'un dispositif de mesure pneumatique selon l'art antérieur,
- la figure 2 montre un dispositif de mesure selon un premier mode d'exécution de l'invention adapté à la mesure d'alésages,
- la figure 3 montre un dispositif de mesure selon un deuxième mode d'exécution de l'invention également adapté à la mesure d'alésages,
- la figure 4 présente un capteur de mesure utilisé sur le dispositif selon l'invention, capteur adapté à la mesure de diamétres de pièces cylindriques,
- la figure 5 présente une buse d'entrée telle qu'elle est connue dans les mesures pneumatiques, mais appliquée ici à un liquide,
- la figure 6 présente une buse d'entrée modifiée selon l'invention, et
- la figure 7 est un schéma d'un circuit d'alimentation et de commande d'un transducteur équipant le dispositif de mesure selon l'invention.

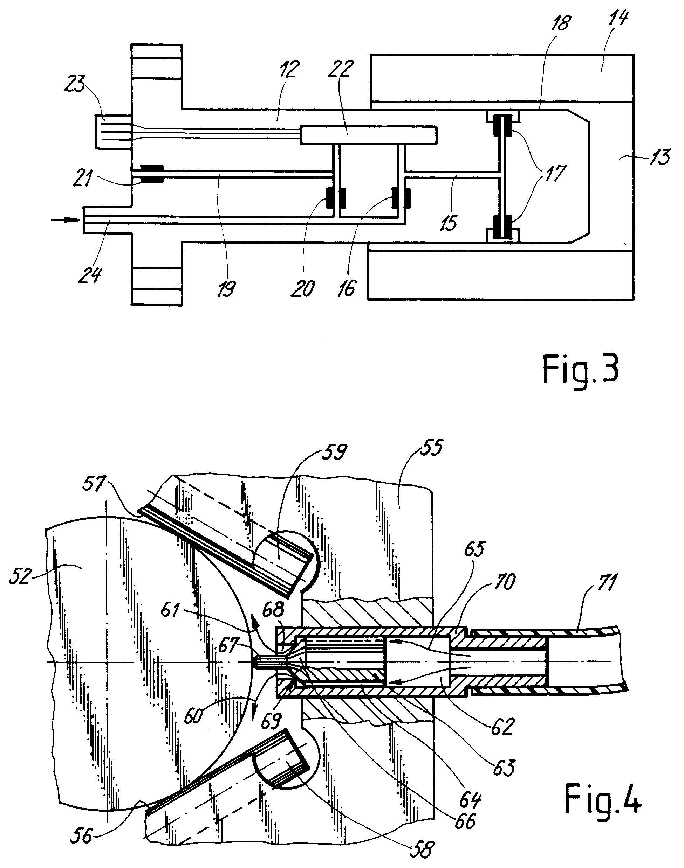

Très généralement, les figures 2 et 3 présentent deux modes d'exécution différents de l'invention dans lesquels le dispositif de mesure comporte un circuit dans lequel circule un liquide. Ce circuit comprend une première branche 15 munie d'une buse d'entrée 16 et d'au moins une buse de mesure 17 dirigée vers la pièce 14 dont il s'agit de mesurer les dimensions intérieures 13. Le circuit comprend encore une seconde branche 19 munie d'une buse d'entrée 20 et débouchant dans une buse de sortie de référence 21. Le dispositif comporte encore un transducteur de pression 22 délivrant un signal électrique sur ses bornes 23, signal qui est représentatif de la différence des pressions régnant dans les branches 15 et 19 du circuit. Les figures 2 et 3 montrent encore qu'un embout 24 permet de relier les buses d'entrée 16 et 20 à une source de pression réglée (non représentée).

Plus particulièrement, les figures 2 et 3 montrent des dispositifs équipés d'une broche de mesure 2, respectivement 12, à la surface de laquelle débouchent des buses de mesure 17.

Dans le cas du dispositif de la figure 2, le système comporte une unité de mesure 3 comportant les buses d'entrée 16 et 20, la buse de sortie de référence 21 et le transducteur de pression 22. Une canalisation souple 9 relie la broche 2 à l'unité 3. Dans ce cas, on peut utiliser des broches de dimensions quelconques, voire de très petites dimensions, avec une unité de mesure qui reste standard. On a déjà dit que, le fluide de mesure étant liquide, le temps de réaction du système est extrêmement court, de l'ordre de 10 ms et cela dans les limites de longueur raisonnable de la canalisation 9.

Dans le cas du dispositif de la figure 3, les buses de mesure 17, les buses d'entrée 16 et 20, la buse de sortie de référence 21 et le transducteur de pression 22 sont logés intégralement à l'intérieure de la broche 12.

Dans les cas particuliers des figures 2 et 3, la broche de mesure 2, 12 comporte une extrémité cylindrique 18 pour la mesure du diamètre d'un alésage 13. Deux buses de mesure 17 débouchent symétriquement en deux endroits opposés de l'extrémité cylindrique 18.

Le transducteur de pression différentielle 22 est un élément semi-conducteur. Il est constitué essentiellement d'une plaquette semi-conductrice dans laquelle a été réalisée une membrane par des procédés d'usinage chimique, ainsi qu'un pont de piézo-résistances formées sur la membrane et des éléments amplificateurs. De tels transducteurs de pression, et leur fabrication sont décrits par exemple dans la demande de brevet français 2 266 314. On peut s'en procurer auprès de la société Sensym sous la référence SPX 200.

Il est apparu intéressant de dimensionner la buse de référence 21 de telle manière que la pression différentielle entre les deux branches soit nulle au moment où les dimensions de la pièce 14 atteignent leur valeur de consigne. En effet, la stabilité et la précision de la mesure des dimensions sont maximales lorsque cette pression différentielle est voisine de zéro et la disposition précédente permet de s'assurer que la précision maximale est obtenue, par exemple en cours d'usinage, lorsque l'on s'approche des dimensions de consigne.

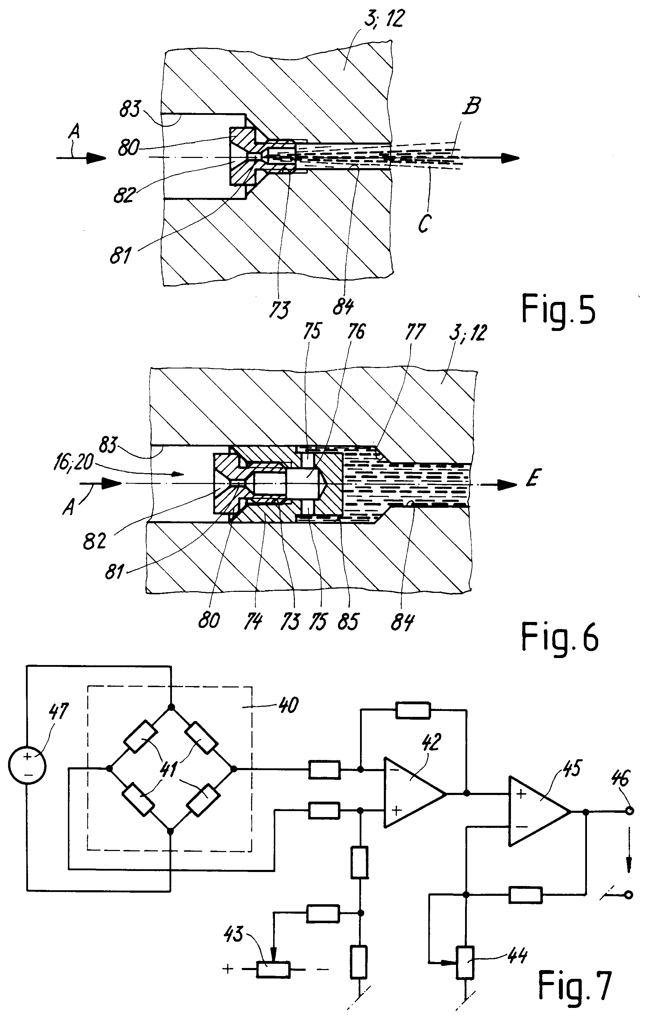

Dans la figure 7, on a représenté de façon schématique un circuit de commande du transducteur de pression différentielle utilisé dans le dispositif de l'invention. Ce transducteur est schématisé dans le cadre en traits pointillés 40 par un pont de piézo-résistances 41 qui sont alimentées par l'intermédiaire d'une alimentation 47, de préférence une source de courant. Un amplificateur opérationnel 42 dont l'une des entrées est commandée par l'intermédiaire d'un potentiomètre réglable 43 permet d'assurer le réglage du zéro du signal de sortie, tandis que le gain de l'amplification est défini par le potentiomètre 44 qui agit sur l'amplificateur 45, à la sortie 46 duquel peut être recueilli le signal représentatif de la dimension mesurée.

On mentionnera que quelle que soit la façon de réaliser le dispositif de mesure, selon la figure 2 ou selon la figure 3, les caractéristiques dimensionnelles et dynamiques dudit dispositif lui permettent de s'appliquer à de nombreux types de mesures dans le domaine de l'usinage de pièces. En particulier, il est particulièrement bien adapté pour être monté à l'intérieur de la poupée porte-pièce d'une rectifieuse intérieure, et relié cinématiquement à la poupée porte-outil, de manière à effectuer une mesure de diamètre de l'alésage de la pièce rectifiée lors de chaque oscillation de l'outil, et de permettre ainsi de régler en continu l'avance de la meule, tout au long de l'opération de rectification, et de l'arrêter lorsque la dimension nominale de l'alésage est atteinte.

La figure 4 présente un capteur de mesure 70 utilisé sur le dispositif selon l'invention, capteur adapté à la mesure de diamètres de pièces cylindriques. Ici, le dispositif comporte une tête 55 qui présente une ouverture munie de deux arêtes rectilignes 56 et 57 disposées en V. Les arêtes appuyent contre la pièce 52 et sont ici matérialisées par les génératrices de barreaux cylindriques ou touches 58 et 59 réalisés en matériau dur, du carbure de tungstène par exemple. Sur la tête 55 est monté le capteur 70 disposé selon la bissectrice de l'angle formé par les arêtes 56 et 57, ce capteur livrant, de façon connue en soi, un signal représentatif du diamètre de la pièce à usiner. Le capteur 70, tenant lieu de buse de mesure, est ici un capteur dit à fuite indirecte. Un liquide 65 sous pression est injecté dans le tuyau souple 71 qui est emmanché dans le capteur 70 proprement dit. Le capteur comporte une chambre 62 dans laquelle se meut un piston 63. Ce piston est pourvu de canaux 64 pour laisser passer le liquide. Le piston se termine par un cône 66 et un palpeur 67. Quand le capteur est libre, le piston obture l'orifice 68 par appui du cône 63 sur un rebord 69 que présente cet orifice 68. Quand le piston 67 est repoussé vers la droite, ce qui se produit quand le diamètre de la pièce 52 diminue sous l'effet du travail de la meule, du liquide peut s'écouler selon les flèches 60 et 61. A ce moment, le flux de liquide varie, ce qui a pour conséquence de faire varier la pression qui est alors une mesure de la pénétration du palpeur dans le capteur.

Il est clair que la tête qui vient d'être décrite peut être reliée au moyen du tuyau souple 71 à l'unité de mesure 3 qui a été décrite à propos de la figure 2, le sytème de mesure différentiel restant le même.

On va décrire maintenant deux formes de buse d'entrée qui appellent des commentaires importants.

La buse 80 de la figure 5 est d'une forme couramment utilisée pour être montée dans des dispositifs pneumatiques. La buse 80 est vissée dans un taraudage 73 pratiqué soit dans l'unité de mesure 3 (figure 2), soit dans la broche 12 (figure 3). Une telle buse est utilisée comme buse d'entrée 16 et 20 et comporte généralement un cône d'entrée 82 et un étranglement 81. Si un liquide est injecté dans le canal 83 dans le sens de la flèche A, l'étranglement 81 aura pour effet d'accroître la vitesse du liquide à la sortie 84 de la buse dans la direction B et, en conséquence, de créer des turbulences indésirables, ce qui provoque un bruit de fond important sur le transducteur de pression. Les turbulences sont produites par un jet à grande vitesse en B par rapport à la région C où cette vitesse est moins importante.

La buse de la figure 6 est conçue pour éviter ces turbulences et pour assurer à sa sortie un écoulement homogène du liquide. Cette buse comporte deux parties. La première partie 80 est semblable à celle de la figure 5 avec son cône d'entrée 82 et son étranglement 81. Cette première partie est vissée dans un taraudage 73 pratiqué dans une seconde partie 74 elle-même chassée dans le canal d'entrée 83. Cette seconde partie 74 comporte une chambre 76 et au moins un conduit de sortie 75 pratiqué sensiblement perpendiculairement à l'axe que présente l'étranglement 81. On s'arrange pour que la section du conduit 75 soit plus grande que la section du l'étranglement 81. Cette différence de section ajoutée à la perpendicularité citée ont pour résultat de dissiper l'énergie cinétique du jet de liquide ou, si l'on préfère, de casser sa vitesse, sans produire de chute de pression supplémentaire. On trouve alors dans les canaux de sortie 85 et 84 un liquide s'écoulant sans grande turbulence dans la direction de la flèche E et atteignant le transducteur de pression 22 sans provoquer de bruit.

L'invention n'est pas limitée à la buse décrite en figure 6, toute autre forme pouvant être imaginée qui permette de délivrer à la sortie de la buse un écoulement du liquide produisant un bruit minimum sur le signal électrique issu du transducteur de pression.

On a vu les avantages apportés par l'utilisation conjointe d'un liquide et d'une buse particulière dans les dispositifs de mesure de dimensions de pièces, le principal avantage résidant dans le fait qu'il réduit le temps consacré à la mesure dans les arrangements de mesure in process et que partant, il permet une cadence de production plus importante. On notera qu'on peut utiliser avec profit un liquide de mesure qui est le même que le liquide utilisé pour l'usinage des pièces, à condition naturellement de procéder à un filtrage de qualité approprié.

**Revendications**

1. Dispositif de mesure des dimensions d'une pièce (14, 52) comprenant un circuit dans lequel circule un liquide, ledit circuit comportant une première branche (15) munie d'une buse d'entrée (16) et d'au moins une buse de mesure (17) dirigée vers la pièce dont il s'agit de mesurer les dimensions, et une seconde branche (19) munie d'une buse d'entrée (20) et débouchant dans une buse de sortie de référence (21), un transducteur de pression (22) délivrant un signal électrique représentatif de la différence des pressions régnant dans les deux branches du circuit et des moyens (24) pour raccorder les buses d'entrée à une source de pression régulée, caractérisé par le fait que les buses d'entrée (16, 20) sont équipées de moyens pour délivrer à leur sortie un écoulement du liquide produisant un bruit minumum sur le signal électrique issu du transducteur de pression (22).

2. Dispositif selon la revendication 1, caractérisé par le fait que les buses d'entrée comportent un étranglement (81) et au moins un conduit de sortie (75) séparés par une chambre (76), la section du conduit de sortie étant plus grande que la section de l'étranglement et le conduit de sortie étant disposé sensiblement perpendiculairement à l'axe que présente l'étranglement.

3. Dispositif selon la revendication 1, caractérisé par le fait qu'il comporte une broche de mesure (2) à la surface de laquelle débouche(nt) la (les) buse de mesure (17), une unité de mesure (3) comportant les buses d'entrée (16, 20), la buse de sortie de référence (21) et le transducteur de pression (22), et une canalisation souple (9) reliant ladite broche à ladite unité.

4. Dispositif selon la revendication 1, caractérisé par le fait qu'il comporte une broche de mesure (12) à la surface de laquelle débouche(nt) la (les) buse de mesure (17), les buses d'entrée (16, 20), la buse de sortie de référence (21) et le transducteur de pression (22) étant logés intégralement à l'intérieur de ladite broche.

5. Dispositif selon la revendication 3 ou la revendication 4, caractérisé par le fait que la broche de mesure (2, 12) comporte une extrémité cylindrique (18) pour la mesure du diamètre d'un alésage et que deux buses de mesure symétriques (17) débouchent en deux endroits opposés de l'extrémité cylindrique.

6. Dispositif selon la revendication 1, caractérisé par le fait qu'il comporte une tête de mesure présentant une ouverture munie de deux arêtes (56,57) disposées en forme de V et susceptibles de s'appuyer sur une pièce cylindrique (52) dont il s'agit de mesurer le diamètre, la tête portant une buse ou capteur de mesure (70) disposé selon la bissectrice de l'angle formé par les deux arêtes, ladite buse ou capteur étant relié par une canalisation souple (71) à une unité de mesure (3) comportant les buses d'entrée (16, 20), la buse de sortie de référence (21) et le transducteur de pression (22).

Fig. 1

Fig. 2

Fig.3

Fig.4

Fig.5

Fig.6

Fig.7

Office européen
des brevets

**RAPPORT DE RECHERCHE EUROPEENNE**

Numero de la demande

EP    91 11 8223

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-0 109 936 (MESELTRON S.A.)<br>* Titre; figures 1-5; ensemble du brevet *<br>--- | I,3-5 | G01B13/10 |
| A | US-A-3 494 078 (K. MIYAMOTO)<br>* colonne 2, ligne 8 - colonne 4, ligne 16; figures 1-5 *<br>--- | 1-3,5 | |
| A | US-A-2 497 236 (L.F. POLK)<br>* colonne 1, ligne 38 - colonne 3, ligne 39; figures 1-4 *<br>----- | 1-3,6 | |
| | | | **DOMAINES TECHNIQUES RECHERCHES (Int. Cl.5 )**<br><br>G01B |

Le présent rapport a été établi pour toutes les revendications

| Lieu de la recherche | Date d'achèvement de la recherche | Examinateur |
|---|---|---|
| LA HAYE | 13 DECEMBRE 1991 | VISSER F. |